# EUROPEAN PATENT APPLICATION

(11) **EP 2 267 609 A2**
(43) Date of publication of application: **29.12.2010**
(21) Application number: 09732983.3
(22) Date of filing: 16.04.2009
(51) Int. Cl.: G06F 15/16, G06F 9/44

(54) **METHOD AND DEVICE FOR PROVIDING AND RECEIVING A USER INTERFACE WITH REFERENCE TO THE PROPERTIES OF THE CLIENT**

(30) Priority: 17.04.2008 US 45787; 12.08.2008 KR 20080079032
(71) Applicant: Samsung Electronics Co., Ltd., Suwon-si, Gyeonggi-do 442-742 (KR)
(72) Inventor: RYU, Young-Sun, Yongin-si Gyeonggi-do 446-712 (KR); PARK, Kyung-Mo, Yongin-si Gyeonggi-do 446-712 (KR); CHO, Seong-Ho, Yongin-si Gyeonggi-do 446-712 (KR); PARK, Ho-Yeon, Yongin-si Gyeonggi-do 446-712 (KR)
(74) Representative: Davies, Robert Ean
(86) International application number: PCT/KR2009/001952
(87) International publication number: WO 2009/128651

(57) **Abstract**

A method and apparatus for providing/receiving a user interface (UI) is provided. In the method and apparatus, a server provides, to a client, a UI encoded in a multimedia data format by considering client characteristics. Accordingly, various Uls for controlling the same server can be provided/received, thus making a UI session between the single server and various devices possible.

## Description

### [Technical Field]

One or more embodiment relates to a method and apparatus for providing/receiving a user interface (UI) between a remote client and a server, and more particularly, to a method and apparatus for providing/receiving a UI required for a client to access a server.

### [Background Art]

Various types of multimedia devices have been developed, and convergence has accelerated therebetween. Frequently, different types of multimedia devices constitute a network and thus transmit and receive multimedia data to and from each other via the network or control each other through the network.

Remote control is performed through a remote user interface (RUI). A user interface (UI) server provides a UI for control to a UI client. The UI client controls the UI server through the UI. For example, in a method of providing/receiving a UI according to the CEA-2014 standard, a UI server provides a UI for remote control in the form of a web page to a UI client, and the UI client displays the web page to a user via a browser. Then, the user of the UI client controls the UI server by using the displayed UI.

### [Disclosure]

### [Technical Problem]

### [Technical Solution]

Additional aspects and/or advantages will be set forth in part in the description which follows and, in part, will be apparent from the description, or may be learned by practice of the invention.

One or more embodiments provide a method and apparatus for providing/receiving a user interface (UI), and a computer-readable recording medium having recorded thereon a program for executing the method.

### [Advantageous Effects]

According to the present invention, a UI session between one server and various devices is available.

### [Description of Drawings]

These and/or other aspects and advantages will become apparent and more readily appreciated from the following description of the embodiments, taken in conjunction with the accompanying drawings of which:
FIG. 1 is a data flow diagram of a method of providing/receiving a user interface (UI), according to an embodiment;
FIG. 2 illustrates a UI control point according to an embodiment of the present invention;
FIG. 3 is a block diagram for illustrating a method of providing a UI to a plurality of clients, according to an embodiment;
FIG. 4 is a block diagram of a client according to an embodiment; and
FIG. 5 is a block diagram of a server according to an embodiment.

### [Best Mode]

According to an aspect of the embodiment, a method in which a client receives a UI from a server, the method comprising: transmitting information about characteristics of the client to the server; and receiving the UI which is transmitted by the server based on the information is provided.

The UI may be a UI which is encoded in a multimedia data format according to a Moving Picture Experts Group (MPEG) scene-description technology.

The MPEG scene-description technology may be based on either an MPEG-4 Binary Format for Scene (BIFS) or MPEG-4 Lightweight Applications Scene Representation (LASeR).

The information about the characteristics may comprise information about the capability of the client.

The information about the characteristics may comprise information about a protocol used by the client to control the server using the UI.

The protocol may comprise at least one of a Universal Plug and Play(UPnP) device architecture (DA) and UPnP device control protocols (DCPs).

According to another aspect of the embodiment, a method in which a server provides a UI to a client, the method comprising: receiving information about characteristics of the client from the client; and providing a UI in which the characteristics of the client have been reflected based on the information, to the client is provided.

According to another aspect of the embodiment, a UI receiving apparatus included in a client which receives a UI from a server, the UI receiving apparatus comprising: a characteristic information transmission unit transmitting information about characteristics of the client to the server; and a UI receiving unit receiving the UI which is transmitted by the server based on the information is provided.

According to another aspect of the embodiment, there is provided a UI providing apparatus included in a server which provides a UI to a client, the UI providing apparatus comprising: a characteristic information transmission unit receiving information about characteristics of the client from the client; and a UI providing unit providing a UI in which the characteristics of the client have been reflected based on the information, to the client is provided.

According to another aspect of the embodiment, a computer-readable recording medium having recorded thereon a program for executing the method in which the server provides the UI to the client claim and/or a program for executing the method in which the client receives the UI from the server is provided.

### [Mode for Invention]

Reference will now be made in detail to the embodiments, examples of which are illustrated in the accompanying drawings, wherein like reference numerals refer to the like elements throughout. The embodiments are described below to explain the present invention by referring to the figures.

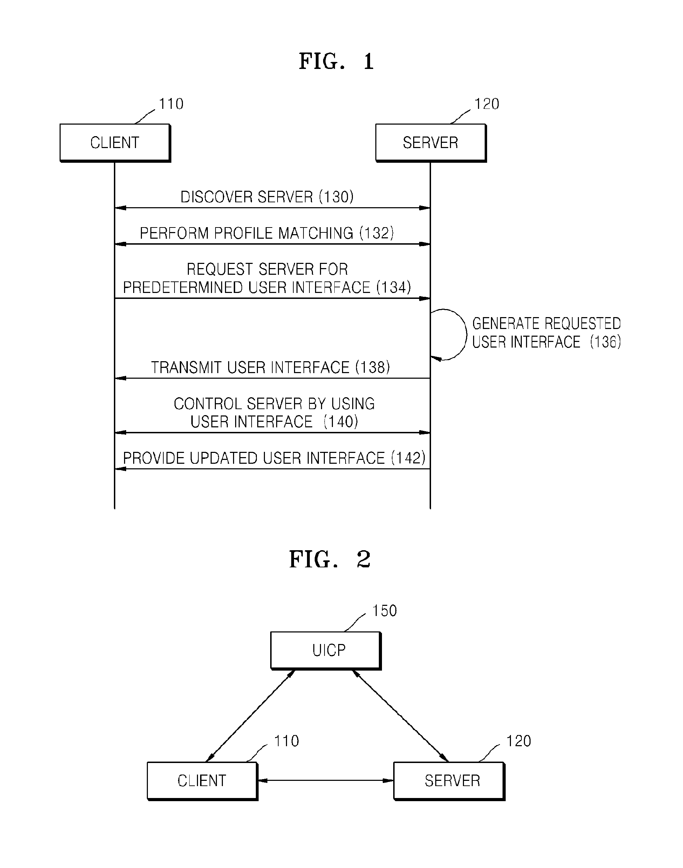

FIG. 1 is a data flow diagram of a method of providing/receiving a user interface (UI), according to an embodiment. Referring to FIG. 1, a client 110 is a UI client which receives a predetermined UI in order to access a server 120.

In operation 130, the client 110 discovers the server 120. For example, the client 110, which is a device on a Universal Plug and Play (UPnP) home network, discovers the server 120 which provides a UI via the UPnP home network. The UPnP home network may be a home network that follows a digital living network alliance (DLNA) guideline. Although the client 110 and the server 120 are illustrated in FIG. 1 as being home network devices, the client 110 and the server 120 are not limited thereto and may be any type of network devices connected to each other via a predetermined network. This will be described in greater detail with reference to FIG. 2.

FIG. 2 illustrates a UI control point (UICP) 150 according to an embodiment.

The client 110, which is a device on a UPnP home network, discovers the server 120 via the UICP 150. The UICP 150 performs a function similar to that of a control point of the UPnP home network. The UICP 150 provides, to the client 110, the address of the server 120, information about a UI provided by the server 120, and other information. The client 110 receives these pieces of information from the U I CP 150 and discovers the server 120.

Although the UICP 150 being a device independent of the client 110 or the server 120 is illustrated in FIG. 2, it will be easily understood that the UICP 150 may be embedded in the client 110 or the server 120.

Referring back to FIG. 1, the client 110 and the server 120 perform profile matching in operation 132. The profile matching denotes an operation of exchanging predetermined information which is used by the server 120 to provide a UI in consideration of the characteristics of the client 110.

The profile of the client 110, that is, information about the characteristics of the client 110, includes information about the capability, preference, etc., or a combination of the client 110. The profile of the client 110 also includes information about a protocol used by the client 110 to control the server 120 by using the UI.

Information about the capability of the client 110 may include information about hardware capability such as a central processing unit (CPU), a memory, a display resolution, a battery level, etc. For example, the server 120 needs to know the hardware capability of the client 110 in order to provide the UI in consideration of the hardware performance of the client 110. Thus, in operation 132, the client 110 transmits information about hardware capability as the information about the characteristics of the client 110 to the server 120.

The information about the preference of the client 110 includes information about the preference of a user who uses the client 110. The information about the preference of the user who uses the client 110 is needed by the server 120 to provide a UI in consideration of different preferences of users that depend on the age, sex, occupation, etc. of users.

The information about the protocol used by the client 110 to control the server 120 by using the UI may include information about a protocol such as a UPnP device architecture (DA) or UPnP device control protocols (DCPs). The client 110 includes a predetermined control message in an up-stream and transmits the up-stream with the control message to the server 120. Accordingly, information about a protocol defined for transmission and reception of the control message between the client 110 and the server 120 is shared so that the server 120 can be controlled. To achieve this, in operation 132, the client 110 and the server 120 transmit and receive information about a control protocol for a control operation 140 therebetween.

In operation 134, the client 110 requests the server 120 for a predetermined UI. The operation 134 maybe optional, and thus the server 120 may provide the UI to the client 120 with or without a clear request of the client 110 such as the request performed in operation 134.

In operation 136, the server 120 generates the requested UI based on a result of the profile matching performed in operation 132. The UI is encoded in a multimedia data format. If the server 120 generates a UI without considering the characteristics of the client 110 and provides the UI to the client 110, the client 110 may not display the received UI. For example, if the server 120 provides a UI with a 1920X1080 resolution to the client 110 capable of displaying a UI with a 640X480 resolution, the client cannot display the received UI. Thus, the server 120 generates the UI based on the information about the characteristics of the client 110, which has been received in operation 132.

As described above, the server 120 encodes the UI in a multimedia data format. For example, the server 120 may encode the UI according to a standard Moving Picture Experts Group (MPEG). The standard MPEG is an International standard for a video and audio compressing method, and various versions of standards such as MPEG-1, MPEG-2, MPEG-4, and MPEG-7 exist. The server 120 generates the UI according to such an MPEG standard. Since most recently produced devices include an MPEG decoder capable of reproducing compressed moving pictures, if a UI is encoded based on the MPEG standard, most devices can display a UI without special applications which are used to display a UI.

In particular, the server 120 may encode the UI by using an object-based image encoding method such as an MPEG-4 Binary Format for Scene (BIFS) and an MPEG-4 Lightweight Applications Scene Representation (LASeR) for mobile apparatuses. By considering UI objects as image objects encoded by BIFS or LASeR, a temporal and spatial arrangement of the UI objects is expressed using a BIFS or LASeR scene-description technology so as to encode the UI.

The BIFS or LASeR methods includes information about the scene-description technology by which a temporal and spatial arrangement of objects included in an image can be expressed. Accordingly, a temporal and spatial arrangement of the UI objects such as buttons, menus, etc. is expressed using the BIFS or LASeR.

Taking as an example a case where a UI is encoded using an image codec such as BIFS or LASeR to generate an MPEG-stream including an image corresponding to the UI, the client 110 receives the MPEG-stream including an image corresponding to the UI encoded by BIFS or LASeR, and can display the UI by only decoding and reproducing the MPEG-stream using an MPEG decoder.

Since the UI can be only be displayed by reproducing the MPEG-stream, various devices including MPEG decoders may display Uls provided by the server 120.

In operation 138, the server 120 transmits the UI generated in operation 136 to the client 110. More specifically, the server 120 transmits multimedia data about the UI to the client 110 in a streaming or downloading manner.

In operation 140, the client 110 controls the server 120 by using the UI received in operation 138. More specifically, the client 110 reproduces the received UI and displays the same to users, and transmits and receives a predetermined control message to the server 120 based on inputs of the users through the displayed UI. The control message may be a message indicating a call of a predetermined event.

The client 110 and the server 120 transmit and receive the control message therebetween according to a control protocol, for example, a UPnP DA or UPnP DCPs, determined in operation 132, and perform a control operation based on the transmitted and received control message.

In operation 142, the server 120 provides an updated UI to the client 110.

When an update of the UI is needed according to a result of the control operation 140, the server 120 provides the updated UI to the client 110. Operations 136 and 138 are repeated. In other words, according to the result of the control operation 140, the server 120 encodes the updated UI in a multimedia data format and transmits the encoded UI to the client 110.

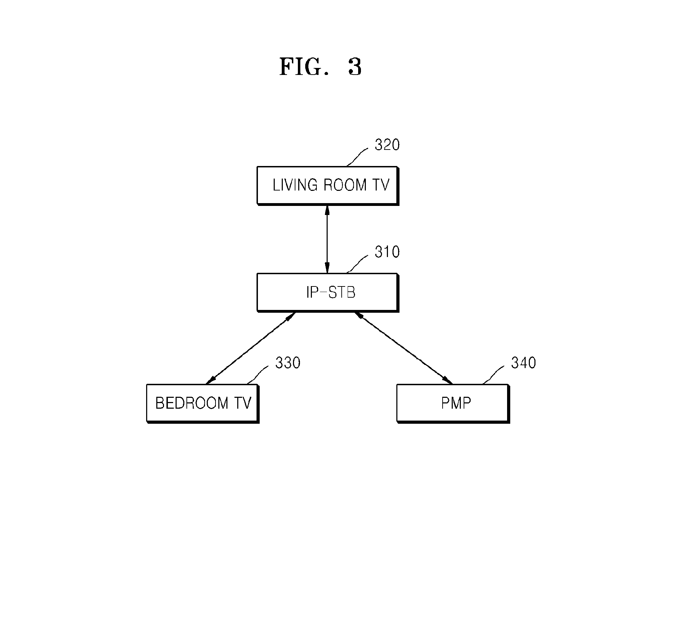

Through operations 130 through 142, the server 120 may provide a UI in which the characteristics of the client 110 are reflected. For example, the server 120 may provide, to various clients connected to one another via a home network, Uls in which the characteristics of the clients are reflected. This will now be described in greater detail with reference to FIG. 3.

FIG. 3 is a block diagram for illustrating a method of providing a UI to a plurality of clients, according to an embodiment.

Referring to FIG. 3, an IP-set top box (STB) 310, which is a UI server, provides a UI to a living room TV 320, a bedroom TV 330, and a portable media player (PMP) 340, which are UI clients connected to one another via a home network (wired or wireless network).

The living room TV 320, the bedroom TV 330, and the PMP 340 have different characteristics. If the IP-STB 310 provides a UI associated with movie content to the living room TV 320, the bedroom TV 330, and the PMP 340, the IP-STB 310 provides a UI in which the characteristics of the living room TV 320, the bedroom TV 330, and the PMP 340 have been reflected. For example, although a single UI is needed for the same movie content, if the living room TV 320 has a resolution of 1080P and the bedroom TV 330 has a resolution of 720P, different UIs are provided to the living room TV 320 and the bedroom TV 330.

Since the PMP 340 generally reproduces an image with a resolution lower than that provided by a TV, a UI is provided in consideration of the hardware capability of the PMP 340.

Since a UI is encoded in a multimedia data format by using the scene-description technology based on the MPEG standard, even when the living room TV 320, the bedroom TV 330, and the PMP 340 do not have special applications for Uls, they can still display Uls so long as they include MPEG decoders.

Although the hardware capability of a client has been illustrated as the information about the characteristics of the client, if the living room TV 320, the bedroom TV 330, and the PMP 340 have different preferences and use different control protocols, the IP-STB 310 may provide different Uls to the living room TV 320, the bedroom TV 330, and the PMP 340 in consideration of these differences.

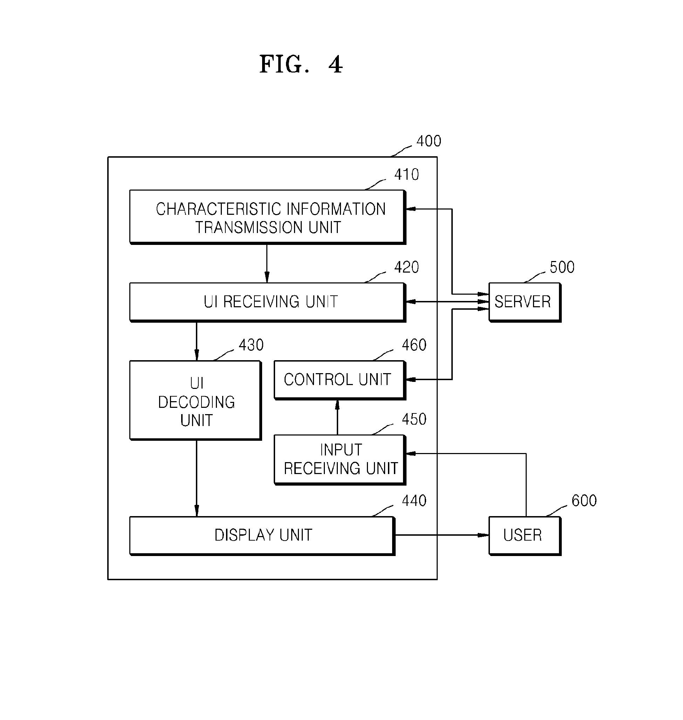

FIG. 4 is a block diagram of a client 400 according to an embodiment. Referring to FIG. 4, the client 400 includes a characteristic information transmission unit 410, a UI receiving unit 420, a UI decoding unit 430, a display unit 440, an input receiving unit 450, and a control unit 460. The characteristic information transmission unit 410 and the UI receiving unit 420 correspond to a UI receiving apparatus according to an embodiment.

The characteristic information transmission unit 410 performs file matching together with a server 500. More specifically, the characteristic information transmission unit 410 transmits the profile of the client 400, namely, information about the characteristics of the client 400, to the server 500. The information about the characteristics of the client 400 includes information about the capability, preference, etc. of the client 400. The information about the characteristics of the client 400 also includes information about a protocol used by the client 400 to access the server 500 via the UI.

The characteristic information transmission unit 410 transmits, to the server 500, information about a hardware capability such as a central processing unit (CPU), a memory, a display resolution, a battery level, etc. and information about a protocol (for example, a UPnP DA or UPnP DCPs) which is used by the client 400 to control the server 500 using the received UI.

The UI receiving unit 420 receives a UI in which the characteristics of the client 400 has been reflected, the UI transmitted by the server 500 based on a result of the profile matching performed by the characteristic information transmission unit 410. According to an embodiment, the UI may be encoded in the multimedia data format according to the MPEG standard. The UI receiving unit 420 receives a UI transmitted in a streaming or downloading way by the server 500.

The UI receiving unit 420 may request the server 500 for a UI and receive the requested UI from the server 500 in response to the request. However, the UI receiving unit 420 does not necessarily request the server 500 for a UI and instead may receive the UI from the server 500 regardless of whether a clear request has been made.

According to another embodiment, the received UI may be the UI encoded using an object-based image encoding method such as MPEG-4 LASeR for mobile apparatuses or MPEG-4 BIFS.

The UI decoding unit 430 decodes the UI received by the UI receiving unit 420. For example, the UI decoding unit 430 decodes a UI which has been encoded according to an object-based image encoding method such as LASeR for mobile apparatuses or MPEG-4 BIFS. In other words, the UI decoding unit 430 may be an MPEG decoder.

The display unit 440 displays, to a user 600, a UI into which the UI decoding unit 430 has decoded the encoded UI.

The input receiving unit 450 receives an input of the user 600 performed on the UI displayed on the display unit 440. The input receiving unit 450 may receive a user input through various input devices such as a keyboard, a mouse, a touch screen, etc.

The control unit 460 transmits and receives a predetermined control message to and from the server 500 on the basis of the input of the user 600 received by the input receiving unit 450. The control message may be a message indicating a call of a predetermined event. The control unit 460 transmits and receives the control message to and from the server 500 according to a protocol determined according to the profile matching performed by the characteristic information transmission unit 410. The manner in which a client and a server can transmit and receive a control message therebetween according to a control protocol such as a UPnP DA or UPnP DCPs has already been described above. However, the control protocol is not limited thereto.

When the UI is updated as a control operation is performed, the client 400 receives the updated UI by using the UI receiving unit 420, decodes the received UI by using the UI decoding unit 430, and displays the decoded UI to the user 600 via the display unit 440.

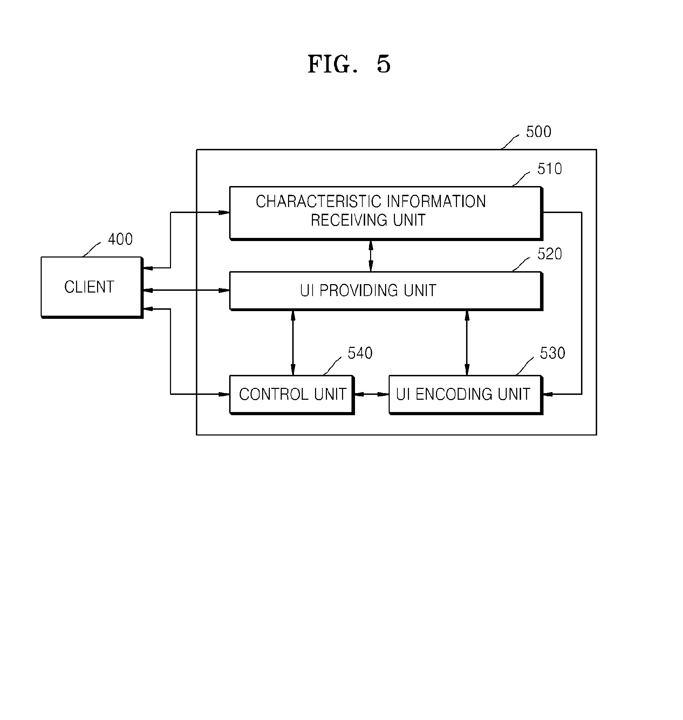

FIG. 5 is a block diagram of the server 500 illustrated in FIG. 4, according to an embodiment of the present invention. Referring to FIG. 5, the server 500 includes a characteristic information receiving unit 510, a UI providing unit 520, a UI encoding unit 530, and a control unit 540. The characteristic information receiving unit 510 and the UI providing unit 520 correspond to a UI providing apparatus according to an embodiment of the present invention.

The characteristic information receiving unit 510 performs profile matching together with the client 400. The characteristic information receiving unit 510 receives the profile of the client 400, namely, the information about the characteristics of the client 400, from the client 400.

The UI providing unit 520 provides to the client 400 a UI in which the characteristics of the client 400 has been reflected, based on a result of the profile matching performed by the characteristic information receiving unit 510. More specifically, the UI providing unit 520 provides, to the client 400, a UI encoded by the UI encoding unit 530 in consideration of the characteristics of the client 400.

The UI encoding unit 530 encodes the UI in which the characteristics of the client 400 has been reflected, in the multimedia data format, based on the result of the profile matching performed by the characteristic information receiving unit 510. According to an embodiment, the UI encoding unit 530 encodes the UI according to an object-based image encoding method such as LASeR for mobile apparatuses or MPEG-4 BIFS.

The control unit 540 transmits and receives the predetermined control message to and from the client 400 and thus performs a control operation. The control unit 540 receives the predetermined control message which is transmitted using a protocol such as a UPnP DA or UPnP DCPs by the client 400, and performs a control operation. If the control message indicates a call of a predetermined event, the control unit 540 performs the event according to the control message. When an update of the UI is needed as the event is performed, the control unit 540 controls the UI encoding unit 530 to encode the updated UI. Then, the control unit 540 controls the UI providing unit 520 to provide the updated UI to the client 400.

A system according to the present invention can be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, and optical data storage devices, and. The computer readable recording medium can also be distributed over network coupled computer systems so that the computer readable code is stored and executed in a distributed fashion.

While the present invention has been particularly shown and described with reference to exemplary embodiments thereof, it will be understood by those of ordinary skill in the art that various changes in form and details may be made therein without departing from the spirit and scope of the present invention as defined by the following claims.

Although a few embodiments have been shown and described, it would be appreciated by those skilled in the art that changes may be made in these embodiments without departing from the principles and spirit of the invention, the scope of which is defined in the claims and their equivalents.

## Claims

1. A method in which a client receives a user interface (UI) from a server, the method comprising:
transmitting information about characteristics of the client to the server; and
receiving the UI which is transmitted by the server based on the transmitted information.

2. The method of claim 1, wherein the UI is a UI which is encoded in a multimedia data format according to a Moving Picture Experts Group (MPEG) scene-description technology.

3. The method of claim 2, wherein the MPEG scene-description technology is based on one of an MPEG-4 Binary Format for Scene (BIFS) and MPEG-4 Lightweight Applications Scene Representation (LASeR).

4. The method of claim 2, wherein the information about the characteristics comprises information about the capability of the client.

5. The method of claim 2, wherein the information about the characteristics comprises information about a protocol used by the client to control the server using the UI.

6. The method of claim 5, wherein the protocol comprises at least one of a UPnP device architecture (DA) and UPnP device control protocols (DCPs).

7. The method of claim 2, further comprising controlling the server based on the received UI.

8. The method of claim 7, wherein the controlling of the server comprises:
generating the UI by decoding the multimedia data;
displaying the UI on a screen;
receiving a user input which has been performed based on the UI; and
transmitting a control message to the server according to the user input.

9. The method of claim 7, further comprising receiving an updated UI transmitted by the server based on a result of the control.

10. The method of claim 1, wherein the UI is a widget.

11. A method in which a server provides a UI to a client, the method comprising:
receiving information about characteristics of the client from the client; and
providing a UI in which the characteristics of the client have been reflected based on the information, to the client.

12. The method of claim 11, wherein the providing of the UI comprises:
encoding the UI in a multimedia data format based on the information according to an MPEG scene-description technology; and
transmitting the encoded UI to the client.

13. The method of claim 12, wherein the MPEG scene-description technology is based on one of an MPEG-4 BIFS and MPEG-4 LASeR.

14. The method of claim 12, wherein the information about the characteristics comprises information about the capability of the client.

15. The method of claim 12, wherein the information about the characteristics comprises information about a protocol used by the client to control the server using the UI.

16. The method of claim 15, wherein the protocol comprises at least one of a UPnP device architecture (DA) and Universal Plug and Play (UPnP) device control protocols (DCPs).

17. The method of claim 11, further comprising being controlled by the client based on the provided UI.

18. The method of claim 11, wherein the UI is a widget.

19. A UI receiving apparatus included in a client which receives a UI from a server, the UI receiving apparatus comprising:
a characteristic information transmission unit transmitting information about characteristics of the client to the server; and
a UI receiving unit receiving the UI which is transmitted by the server based on the transmitted information.

20. A UI providing apparatus included in a server which provides a UI to a client, the UI providing apparatus comprising:
a characteristic information transmission unit receiving information about characteristics of the client from the client; and
a UI providing unit providing a UI in which the characteristics of the client have been reflected based on the information, to the client.

21. A computer-readable recording medium having recorded thereon a program for executing the method of claim 1.

22. A computer-readable recording medium having recorded thereon a program for executing the method of claim 11.
